# FASCICULE DE BREVET EUROPEEN

(11) **EP 0 995 360 B1**
(45) Date de publication et mention de la délivrance du brevet: **28.04.2004**
(21) Numéro de dépôt: 98203522.2
(22) Date de dépôt: 20.10.1998
(51) Int. Cl.: A23L 1/212, A23B 7/022, A23B 7/08, A23B 7/157

(54) **Tomates confites**
Zuckertomaten
Candied tomatoes

(43) Date de publication de la demande: 26.04.2000
(73) Titulaire: SOCIETE DES PRODUITS NESTLE S.A., 1800 Vevey (CH)
(72) Inventeur: Gonzales, Carmen, E-06010 Badajoz (ES); Harlaux, Ginette, F-60000 Beauvais (FR)
(74) Mandataire: Thomas, Alain

(56) Documents cités:
- EP-A- 0 663 152
- WO-A-92/10940
- FR-A- 2 682 856
- FR-A- 2 754 149
- FR-A- 2 757 020
- US-A- 3 788 862

## Description

La présente invention a pour objet un procédé de préparation de morceaux de tomates confites, des morceaux de tomates confites ainsi que leur utilisation pour la fabrication de produits alimentaires.

Il est connu de préparer des tomates confites.

Ainsi, CN 88108671 décrit un procédé de fabrication de tomates confites, dans lequel les tomates sont lavées, préparées dans un sirop, confites puis cuites avant d'être conditionnées.

Par ailleurs, HU 863805 décrit un procédé de préservation de tomates vertes, dans lequel les tomates vertes sont pelées, découpées en morceaux, traitées à la vapeur dans un bain contenant de l'acide acétique puis trempées dans un sirop contenant 50% de sucre à 80° C et des agents aromatisants.

Tous les procédés de l'art antérieur connus proposent des préparations de tomates confites dans lesquelles les morceaux de tomates confites sont en immersion dans un sirop stérilisé. Ainsi, aucun procédé connu ne permet de préparer des tomates confites sans une étape de trempage provoquant la perte d'une partie de l'arôme des tomates. Par ailleurs, aucun procédé connu ne permet la congélation de tomates confites en morceaux individualisés.

Le but de la présente invention est de proposer un procédé rapide permettant d'obtenir des morceaux individualisés de tomates confites ne baignant pas dans une solution.

Pour ce faire, la présente invention a pour objet un procédé de préparation de morceaux de tomates confites, dans lequel, on découpe des tomates pelées en morceaux, on les saupoudre d'un mélange à base de sucre et de sel puis on les cuit à 160-220° C pendant 8-20 min, de manière à obtenir des morceaux de tomates confites.

On a constaté avec surprise que le procédé selon l'invention permet d'obtenir des morceaux de tomates confites présentant une belle couleur rouge et ayant un bon goût. Ces morceaux de tomates confites peuvent être facilement congelés, sans qu'il y ait rejet d'eau après décongélation.

Ainsi, dans le procédé de préparation de morceaux de tomates confites selon la présente invention, on découpe des tomates pelées en morceaux, de manière à obtenir des dés de 3-8 cm³.
Si on utilise des tomates congelées pour réaliser le procédé selon l'invention, on découpe de préférence des morceaux de 5-8 cm³ , car l'affaissement de ces morceaux de tomates lors de l'étape de cuisson est plus importante.

On saupoudre alors ces morceaux de tomates avec un mélange à base de sucre et de sel. Ce mélange permet de valoriser le confisage lors de l'étape de cuisson ultérieurement. De préférence, ce mélange contient, par rapport à la quantité de tomates, 0,5-2% de sel et 2-5% de sucre.
On peut ajouter à ce mélange, par rapport à la quantité de tomates, 0,05-0,2% de chlorure de calcium, de manière à préserver et renforcer la texture des morceaux de tomates confites, et 0,05-0,2% d'acide ascorbique, de manière à maintenir la couleur et le goût des morceaux de tomates confites. L'acide ascorbique a un rôle d'anti-oxydant.
On peut également ajouter des herbes et des épices, de manière à aromatiser les morceaux de tomates.

On les cuit alors à 160-220° C pendant 8-20 min, de manière à obtenir des morceaux de tomates confites. On peut effectuer cette étape dans un four à cuisson continue équipé d'un tapis grillagé, sur lequel on dépose les morceaux de tomates. On cuit donc dans un milieu présentant une bonne ventilation et une certaine humidité, de manière à réaliser le confisage des morceaux de tomates sans que ces morceaux ne se dessèchent et grillent lors de l'étape de cuisson. De préférence, la température humide lors de cette étape est de 70-90° C.

On peut ensuite refroidir rapidement à température ambiante les morceaux de tomates confites ainsi réalisés avec de l'air pulsé, avant d'effectuer une surgélation individuelle et rapide. Pour effectuer cette surgélation, on peut notamment utiliser surgélateur "flowfreezer" commercialiser par la société Friscoscandia.

De préférence, on effectue donc une surgélation individuelle et rapide des morceaux de tomates confites.

La présente invention a également pour objet les morceaux de tomates confites obtenus par la mise en oeuvre du procédé.

De préférence, les morceaux de tomates présentent une perte en eau de 4-10%, par rapport à la teneur en eau des tomates au départ. On peut utiliser des tomates ayant une teneur en matière sèche de 4-6%, de manière à réaliser des morceaux de tomates confites ayant une matière sèche de 10-16%.

Enfin, la présente invention a pour objet l'utilisation de morceaux de tomates confites pour la fabrication d'un produit alimentaire. On peut notamment utiliser les morceaux de tomates confites pour la fabrication de sauces ou pour la fabrication de garnitures pour une pizza, pour des snacks ou pour des plats cuisinés.

Les tomates confites, le procédé de préparation de tomates confites ainsi que leur utilisation sont décrits plus en détails à l'aide des exemples ci-après. Dans ces exemples, les pourcentages sont donnés en poids sauf indication contraire.

### Exemple 1

On prépare des morceaux de tomates confites par la mise en oeuvre du procédé selon l'invention.

Pour ce faire, on prend 10 kg de tomates que l'on lave puis que l'on pèle avant de les découper en dés de 4-6 cm³.

On dépose les dés de tomates ainsi préparés sur une grille et on les saupoudre avec 300 g de mélange constitué de 100 g de sel et 200 g de sucre.

On cuit ensuite les dés de tomates saupoudrés à 220° C pendant 10 min, de manière à réaliser des morceaux de tomates confites présentant une texture agréable et une belle couleur rouge.

On refroidit ensuite rapidement à température ambiante les morceaux de tomates confites ainsi réalisés avec de l'air pulsé, avant d'effectuer une surgélation individuelle et rapide jusqu'à -20°C.

### Exemple 2

On vérifie l'influence du mélange à base de sucre et de sel sur la qualité des tomates confites.

Pour ce faire, on prépare 10 kg de tomates que l'on lave puis que l'on pèle avant de les découper en dés de 4-6 cm³ .

On répartit ces dés de tomates en deux lots.

On dépose un (lot n° 1) des deux lots sur une grille et on cuit les dés de tomates à 220° C pendant 10 min sans saupoudrer les dés de tomates avec un mélange à base de sucre et de sel au préalable, de manière à réaliser des morceaux de tomates confites.
On dépose l'autre lot (lot n° 2) sur une grille et on saupoudre les dés de tomates avec 150 g de mélange constitué de 50 g de sel et 100 g de sucre avant d'effectuer l'étape de cuisson telle que décrite précédemment.

Par ailleurs, on prépare deux autres lots (lot n° 3 et lot n° 4) de morceaux de tomates confites de la manière telle que décrite précédemment, à l'exception du fait que l'on ne pèle pas les tomates.

On compare ensuite la proportion de morceaux de tomates grillés lors de l'étape de cuisson. L'ensemble des résultats est mentionné dans le tableau I ci-dessous.

**Tableau I**

| lot | température de cuisson (° C) | durée de cuisson (min) | proportion de morceaux de tomates grillés (%) |
|---|---|---|---|
| lot n° 1 | 220 | 10 | 58,6 |
| lot n° 2 | 220 | 10 | 52,8 |
| lot n° 3 | 220 | 10 | 55,2 |
| lot n° 3 | 220 | 10 | 55,9 |
| légende: - lot n°1 tomates pelées - lot n°2 tomates pelées + mélange à base de sucre et de sel - lot n°3 tomates non pelées - lot n°4 tomates non pelées + mélange à base de sucre et de sel | | | |

Les résultats mentionnés au tableau I mettent donc en évidence le fait que si les morceaux de tomates confites sont préparés selon le procédé de l'invention, c'est à dire si les tomates sont pelées et sont saupoudrées d'un mélange à base de sucre et de sel, on réalise un confisage lors de l'étape de cuisson sans que la proportion de morceaux de tomates grillés ne soit trop importante.

### Exemple 3

On utilise des morceaux de tomates confites tels que réalisés selon la présente invention pour la préparation d'une pizza.

Pour ce faire on dépose sur une pâte à pizza un mélange comprenant, par rapport au poids total du mélange, 45% de morceaux de tomates confites, 10% de fromage de type mozzarella, 10% de saucisson chorizo, 15% d'oignons, 10% d'anchois et 10% d'olives.

On cuit la pizza ainsi réalisée dans un four traditionnel à 170° C pendant 20 min. On réalise ainsi une pizza aux saveurs italiennes ayant un bon goût de tomates.

## Revendications

1. Procédé de préparation de morceaux de tomates confites, dans lequel:
- on découpe des tomates pelées en morceaux,
- on saupoudre ces morceaux avec un mélange à base de sucre et de sel,
- Puis on les cuit à 160-220° C pendant 8-20 min, de manière à obtenir des morceaux de tomates confites.

2. Procédé selon la revendication 1, dans lequel on congèle les morceaux de tomates confites.

3. Procédé selon les revendications 1 et 2, dans lequel le mélange à base de sucre et de sel contient, par rapport à la quantité de tomates, 0,5-2% de sel et 2-5% de sucre.

4. Morceaux de tomates confites obtenus par la mise en oeuvre du procédé selon l'une des revendications 1 à 3.

5. Morceaux de tomates confites selon la revendication 4 ayant une perte en eau de 4-10%, par rapport à la teneur en eau des tomates au départ.

6. Utilisation des morceaux de tomates confites selon les revendications 4 et 5 pour la fabrication d'un produit alimentaire.

## Claims

1. Method for preparing pieces of candied tomatoes wherein:
- the peeled tomatoes are cut up into pieces,
- these pieces are sprinkled with a mixture based on sugar and salt,
- they are then cooked at 160-220°C for 8-20 min so as to obtain pieces of candied tomatoes.

2. Method according to claim 1, wherein the pieces of cooked tomatoes are frozen.

3. Method according to claims 1 and 2, wherein the mixture based on sugar and salt contains, based on the quantity of tomatoes, 0.5-2 % salt and 2-5 % sugar.

4. Pieces of candied tomatoes obtained by implementing the method according to one of claims 1 to 3.

5. Pieces of candied tomatoes according to claim 4 having a water loss of 4-10 % based on the water content of the tomatoes at the start.

6. Use of pieces of candied tomatoes according to claims 4 and 5 for the production of a food product.

## Patentansprüche

1. Verfahren zur Herstellung von Stücken von zuckerbehandelten Tomaten, wobei:
- geschälte Tomaten in Stücke geschnitten werden,
- diese Stücke mit einer Mischung auf Basis von Zucker und Salz bestreut werden,
- diese anschließend bei 160-220 °C während 8-20 Minuten erhitzt werden, um Stücke von zuckerbehandelten Tomaten zu erhalten.

2. Verfahren nach Anspruch 1, wobei die Stücke von zuckerbehandelten Tomaten eingefroren werden.

3. Verfahren nach Anspruch 1 und 2, wobei die Mischung auf Basis von Zucker und Salz in Bezug auf die Menge an Tomaten 0,5-2% an Salz und 2-5% an Zucker enthält.

4. Stücke von zuckerbehandelten Tomaten, welche bei Durchführung des Verfahrens nach einem der Ansprüche 1 bis 3 erhalten werden.

5. Stücke von zuckerbehandelten Tomaten nach Anspruch 4, welche einen Wasserverlust von 4-10% aufweisen, in Bezug auf den Wassergehalt der Tomaten zu Beginn.

6. Verwendung von Stücken von zuckerbehandelten Tomaten nach Anspruch 4 und 5 zur Herstellung eines Lebensmittelprodukts.
